# EUROPÄISCHE PATENTANMELDUNG

(11) **EP 3 474 422 A1**
(43) Veröffentlichungstag der Anmeldung: **24.04.2019**
(21) Anmeldenummer: 17197393.6
(22) Anmeldetag: 19.10.2017
(51) Int. Cl.: H02K 7/06, F16H 25/20

(54) **ANTRIEBSVORRICHTUNG UND VERFAHREN ZUM BETRIEB EINER ANTRIEBSVORRICHTUNG**

(71) Anmelder: Siemens Schweiz AG, 8047 Zürich (CH)
(72) Erfinder: Wattenhofer, Severin, 6344 Meierskappel (CH); Schilter, Felix, 6460 Altdorf (CH)
(74) Vertreter: Maier, Daniel Oliver

(57) **Zusammenfassung**

Die Erfindung ist eine Antriebsvorrichtung (10) und ein Verfahren zum Betrieb einer Antriebsvorrichtung (10), welche eine drehbare Spindel (24) und eine an der Spindel (24) gelagerte Spindelmutter (30) umfasst, wobei die Spindel (24) mittels einer antreibbaren ersten Scheibe (16) drehbar ist, wobei die Spindelmutter (30) mittels einer Führung (26) relativ zur Spindel (24) drehbar ist, wobei die Führung (26) mittels einer antreibbaren zweiten Scheibe (20) drehbar ist, wobei die Spindelmutter (30) relativ zur Führung (26) axial beweglich ist und wobei bei einem Verfahren zum Betrieb der Antriebsvorrichtung (10) durch Einstellung unterschiedlicher Drehzahlen der beiden Scheiben (16, 20) die Spindelmutter (30) in axialer Richtung entlang der Spindel (24) bewegt wird.

## Beschreibung

Die Erfindung betrifft eine Antriebsvorrichtung, nämlich eine linear wirkende Antriebsvorrichtung (Linearantrieb), sowie ein Verfahren zum Betrieb einer solchen Antriebsvorrichtung. Linearantriebe sind an sich bekannt. Ungünstig ist bei motorisch angetriebenen solchen Antriebsvorrichtungen oftmals, dass wegen eines erforderlichen Hochlaufs eines Motors die auszulösende Bewegung erst mit einem gewissen Zeitverzug erfolgt.

Eine Aufgabe der hier vorgeschlagenen Neuerung besteht zuvorderst darin, eine neue Ausführungsform einer linear wirksamen Antriebsvorrichtung anzugeben und im Weiteren auch darin, eine linear wirksame Antriebsvorrichtung anzugeben, die nach einer anfänglichen Aktivierung ohne Zeitverzug wirksam ist.

Diese Aufgabe wird erfindungsgemäß mittels einer im Folgenden als Antriebsvorrichtung bezeichneten Vorrichtung mit den Merkmalen des Anspruchs 1 gelöst. Bei einer solchen Antriebsvorrichtung, welche eine drehbare Spindel und eine an der Spindel gelagerte Spindelmutter aufweist, ist Folgendes vorgesehen: Die Spindel ist mittels einer antreibbaren ersten Scheibe drehbar. Die Spindelmutter ist mittels einer Führung relativ zur Spindel drehbar. Die Führung ist mittels einer antreibbaren zweiten Scheibe drehbar und die Spindelmutter ist relativ zur Führung axial beweglich. Die Spindel und die erste Scheibe bilden zusammen ein erstes Getriebeteil. Die Führung und die zweite Scheibe bilden zusammen ein zweites Getriebeteil. Die Spindelmutter fungiert als drittes Getriebeteil. Die erste Scheibe (das erste Getriebeteil) ist mittels eines ersten Motors drehbar und wird beim Betrieb der Antriebsvorrichtung mittels des ersten Motors in Rotation versetzt. Die zweite Scheibe (das zweite Getriebeteil) ist mittels eines zweiten Motors drehbar und wird beim Betrieb der Antriebsvorrichtung mittels des zweiten Motors in Rotation versetzt.

Bezüglich des Verfahrens wird diese Aufgabe erfindungsgemäß gelöst durch die Merkmale des parallelen Verfahrensanspruchs.

Der Vorteil der Erfindung besteht darin, dass durch die Drehbarkeit der Spindel und die Drehbarkeit der Führung (Drehbarkeit des ersten und zweiten Getriebeteils) eine Bewegung der Spindelmutter entlang der Spindel (Bewegung des dritten Getriebeteils entlang des ersten Getriebeteils), also eine axiale Bewegung, auslösbar ist und dass durch die axiale Bewegung der Spindelmutter (des dritten Getriebeteils) je nach Bewegungsrichtung ein Vorhub oder ein Rückhub der Antriebsvorrichtung auslösbar ist, in welchem die Spindelmutter als Aktor und die Antriebsvorrichtung als Linearantrieb fungiert.

Bei einem Rechtsgewinde der Spindel ergibt sich bei einer alleinigen Drehung der Spindel ein Rückhub der Antriebsvorrichtung. Bei einer alleinigen Drehung der Führung ergibt sich bei einem Rechtsgewinde der Spindel ein Vorhub der Antriebsvorrichtung. Bei einem Linksgewinde der Spindel gilt dies entsprechend umgekehrt. Der besondere Vorteil der gegenständlichen Antriebsvorrichtung besteht aber darin, dass ein Vorhub oder ein Rückhub der Antriebsvorrichtung auslösbar ist, wenn sowohl die Spindel wie auch die Führung rotieren, indem ausgehend von einer anfänglich identischen Drehzahl der Spindel und der Führung die Drehzahl entweder der Spindel oder der Führung erhöht oder verringert wird, sodass jedenfalls eine unterschiedliche Drehzahl von Spindel und Führung resultiert. Ein Vorhub oder ein Rückhub der Antriebsvorrichtung ergibt sich dabei unmittelbar in dem Moment, ab dem ein Drehzahlunterschied besteht. Die Antriebsvorrichtung ist demnach als Linearantrieb unmittelbar wirksam, ohne dass in dem Moment, in dem die Antriebsvorrichtung als Aktor wirksam sein soll, ein Hochlauf eines Motors oder dergleichen abgewartet werden muss.

Die Antriebsvorrichtung kommt in motorisch angetriebener Form bevorzugt zur Verwendung in Form eines Stellantriebs, insbesondere für eine Klappe oder für ein Ventil und beispielsweise zum Einstellen eines gasförmigen oder flüssigen Volumenstroms in Betracht. Ein solcher Stellantrieb ist insoweit zum Beispiel für HLK-Anwendungen (HLK für Heizung, Lüftung, Klimatechnik) für eine Gebäudeautomation vorgesehen. Somit ist die Erfindung auch die Verwendung einer motorisch angetriebenen Antriebsvorrichtung der hier und im Folgenden beschriebenen Art als Stellantrieb, insbesondere als Stellantrieb für eine Klappe oder für ein Ventil, beispielsweise zum Einstellen eines gasförmigen oder flüssigen Volumenstroms.

Vorteilhafte Ausgestaltungen der Erfindung sind Gegenstand der Unteransprüche. Dabei verwendete Rückbeziehungen innerhalb der Ansprüche weisen auf die weitere Ausbildung des Gegenstandes des in Bezug genommenen Anspruchs durch die Merkmale des jeweiligen abhängigen Anspruchs hin. Sie sind nicht als ein Verzicht auf die Erzielung eines selbständigen, gegenständlichen Schutzes für die Merkmale oder Merkmalskombinationen eines abhängigen Anspruchs zu verstehen. Des Weiteren ist im Hinblick auf eine Auslegung der Ansprüche sowie der Beschreibung bei einer näheren Konkretisierung eines Merkmals in einem abhängigen Anspruch davon auszugehen, dass eine derartige Beschränkung in den jeweils vorangehenden Ansprüchen sowie einer allgemeineren Ausführungsform der gegenständlichen Antriebsvorrichtung oder eines Verfahrens zu deren Betrieb nicht vorhanden ist. Jede Bezugnahme in der Beschreibung auf Aspekte abhängiger Ansprüche ist demnach auch ohne speziellen Hinweis ausdrücklich als Beschreibung optionaler Merkmale zu lesen.

Die Drehbarkeit der Spindelmutter relativ zur Spindel mittels der Führung sowie die axiale Beweglichkeit der Spindelmutter relativ zur Führung ist bevorzugt realisiert, indem die Spindelmutter in der Führung einerseits drehfest und andererseits translatorisch beweglich gelagert ist.

Bei einer besonderen Ausführungsform ist die Drehbarkeit der Spindelmutter relativ zur Spindel mittels der Führung realisiert, indem ein Führungsgegenprofil der Spindelmutter mit einem Führungsprofil der Führung zusammenwirkt, insbesondere indem das Führungsgegenprofil der Spindelmutter in das Führungsprofil der Führung eingreift. Ein Eingreifen des Führungsgegenprofils in das Führungsprofil ist zum Beispiel bei einem Formschluss gegeben. Dies ist aber für eine Drehbarkeit der Spindelmutter mittels der Führung nicht zwingend erforderlich, sondern nur eine Option. Vielmehr ist auch ein Zusammenwirken von Führungsprofil und Führungsgegenprofil ausreichend, wie dies beispielsweise gegeben ist, wenn als Führungsprofil und Führungsgegenprofil jeweils eine Rollenbahn oder dergleichen in der Führung bzw. in der Spindelmutter fungiert und die Übertragung des Drehmoments mittels in den Rollenbahnen laufender Kugeln erfolgt.

Bei einer Ausführungsform einer Antriebsvorrichtung, bei der das Führungsgegenprofil in das Führungsprofil eingreift oder mit dem Führungsprofil zusammenwirkt, ist vorgesehen, dass die Führung zumindest einen axialen Abschnitt der Spindel sowie zumindest einen axialen Abschnitt der Spindelmutter umschließt, dass die Führung in einer einer Außenoberfläche der Spindelmutter zugewandten Innenoberfläche das Führungsprofil aufweist und dass die Spindelmutter in ihrer Außenoberfläche das Führungsgegenprofil aufweist. Als Führungsprofil in der Innenoberfläche der Führung kommt bzw. kommen beispielsweise eine oder mehrere in axialer Richtung verlaufende Rillen/Nute in Betracht. Als darin eingreifendes Führungsgegenprofil auf der Außenoberfläche der Spindelmutter kommt entsprechend zumindest eine formschlüssig in eine Rille/Nut eingreifende Rippe in Betracht. Als Führungsprofil der Innenoberfläche der Führung sowie als Führungsgegenprofil der Außenoberfläche der Spindelmutter kommen alternativ beispielsweise mehrere in Umfangsrichtung regelmäßig beabstandete und in axialer Richtung verlaufende Rollenbahnen in Betracht, welche über in den Rollenbahnen laufende Kugeln zusammenwirken.

Bei einer bevorzugten Ausführungsform der Antriebsvorrichtung erhebt sich die Spindel mittig auf der ersten Scheibe und ist senkrecht zu einer der ebenen Flächen der ersten Scheibe orientiert, wobei sich die Führung koaxial mit der Spindel mittig auf der zweiten Scheibe erhebt und senkrecht zu einer der ebenen Flächen der zweiten Scheibe orientiert ist. Eine solche Anordnung und Orientierung der jeweiligen Komponenten der Antriebsvorrichtung gewährleistet einen Zusammenfall der Hauptträgheitsachsen der ersten Scheibe und der Spindel einerseits sowie der zweiten Scheibe und der Führung andererseits mit deren Rotationsachsen. Eine solche Platzierung und Orientierung der Spindel sowie der Führung vermeidet Unwuchten und damit Vibrationen und Verschleiß.

Bei einer besonderen Ausführungsform der Antriebsvorrichtung ist die Spindel einstückig mit der ersten Scheibe und/oder die Führung einstückig mit der zweiten Scheibe verbunden. Eine solche Ausführungsform erhöht die mechanische Belastbarkeit der Antriebsvorrichtung. Eine solche Ausführungsform erleichtert darüber hinaus die Herstellung der jeweiligen Komponenten der Antriebsvorrichtung und die Spindel und die erste Scheibe und/oder die Führung und die zweite Scheibe können zum Beispiel in einem Arbeitsschritt hergestellt werden, zum Beispiel als Kunststoffspritzgussteil oder mittels eines generativen Fertigungsverfahrens ("3D-Druck").

Eine mittels zweier Motoren (erster Motor, zweiter Motor) angetriebene Antriebsvorrichtung wird im Folgenden auch als bimotorische Antriebsvorrichtung oder als bimotorisch angetriebene Antriebsvorrichtung bezeichnet. Die erste und die zweite Scheibe (das erste und das zweite Getriebeteil) sind mittels des ersten Motors bzw. des zweiten Motors gleichzeitig und unabhängig voneinander drehbar. Ein (bi-)motorischer Antrieb der Antriebsvorrichtung erlaubt eine besonders exakte Beeinflussung der Position der als Aktor der Antriebsvorrichtung fungierenden Spindelmutter sowie eine besonders exakte Beeinflussung der Funktion der Antriebsvorrichtung als Linearantrieb.

Bei einer besonderen Ausführungsform einer bimotorisch angetriebenen Antriebsvorrichtung wirken der erste Motor mittels eines ersten Ritzels form- und/oder reibschlüssig auf die erste Scheibe und der zweite Motor mittels eines zweiten Ritzels form- und/oder reibschlüssig auf die zweite Scheibe. Ein Antrieb der beiden Scheiben mittels jeweils eines Ritzels ist eine einfache, belastbare und leicht zu wartende Antriebsart und erlaubt zudem einen symmetrischen Aufbau der Antriebsvorrichtung.

Bei einer weiteren besonderen Ausführungsform einer bimotorisch angetriebenen Antriebsvorrichtung wirken beim bimotorischen Antrieb der ersten Scheibe und der zweiten Scheibe jeweils identische Übersetzungsverhältnisse. Dafür sind entweder das Übersetzungsverhältnis des ersten Ritzels und der ersten Scheibe identisch mit dem Übersetzungsverhältnis des zweiten Ritzels und der zweiten Scheibe oder die Durchmesser der ersten Scheibe und der zweiten Scheibe einerseits sowie des ersten Ritzels und des zweiten Ritzels andererseits sind identisch. Identische Übersetzungsverhältnisse haben den Vorteil, dass für einen Stillstand der Spindelmutter entlang der Spindel die beiden Motoren mit derselben Geschwindigkeit laufen müssen, was sich grundsätzlich durch eine Regelung, aber noch exakter durch eine Kopplung der felderzeugenden Elemente der beiden Motoren erreichen lässt.

Bei einem Verfahren zum Betrieb einer Antriebsvorrichtung der hier und im Folgenden beschriebenen Art ist vorgesehen, dass beim Antrieb der ersten Scheibe (des ersten Getriebeteils) mittels des ersten Motors und der zweiten Scheibe (des zweiten Getriebeteils) mittels des zweiten Motors eine Rotation der jeweiligen Scheibe (der beiden Getriebeteile) mit einer jeweiligen Drehzahl resultiert und dass durch Einstellung unterschiedlicher Drehzahlen der beiden Scheiben die Spindelmutter (das dritte Getriebeteil) in axialer Richtung entlang der Spindel bewegt wird.

Bei einer Ausführungsform des Verfahrens wird durch Einstellung eines Unterschieds der Drehzahlen der beiden Scheiben (durch Einstellung eines Unterschieds der Drehzahlen des ersten und zweiten Getriebeteils) nicht nur eine Bewegung der Spindelmutter (des dritten Getriebeteils) entlang der Spindel ausgelöst, sondern auch eine zum eingestellten Drehzahlunterschied proportionale Geschwindigkeit der Bewegung der Spindelmutter entlang der Spindel vorgegeben.

Bei einer weiteren Ausführungsform des Verfahrens wird die Antriebsvorrichtung aktiviert, indem die beiden Scheiben auf eine übereinstimmende, vorgegebene oder vorgebbare Solldrehzahl beschleunigt werden. Sobald beide Scheiben die Solldrehzahl erreicht haben, ist die Antriebsvorrichtung betriebsbereit und durch Einstellung eines Drehzahlunterschieds kann die Funktion der Spindelmutter als Aktor der Antriebsvorrichtung und die Funktion der Antriebsvorrichtung als Linearantrieb abgerufen werden.

Bei einer nochmals weiteren Ausführungsform des Verfahrens wird durch Einstellung der Solldrehzahl eine mittels der Antriebsvorrichtung ausübbare Kraft eingestellt.

Die mit der Anmeldung eingereichten Patentansprüche sind Formulierungsvorschläge ohne Präjudiz für die Erzielung weitergehenden Patentschutzes. Da speziell die Merkmale der abhängigen Ansprüche im Hinblick auf den Stand der Technik am Prioritätstag eigene und unabhängige Erfindungen bilden können, behält die Anmelderin sich vor, diese oder noch weitere, bisher nur in der Beschreibung und/oder Zeichnung offenbarte Merkmalskombinationen zum Gegenstand unabhängiger Ansprüche oder Teilungserklärungen zu machen. Sie können weiterhin auch selbständige Erfindungen enthalten, die eine von den Gegenständen der jeweils in Bezug genommenen Ansprüche unabhängige Gestaltung aufweisen.

Der Antrieb der Motoren erfolgt bevorzugt unter Kontrolle einer Steuerungseinrichtung. Der Steuerungseinrichtung wird zum Beispiel die Solldrehzahl vorgegeben, woraufhin unter Kontrolle der Steuerungseinrichtung bei einer Aktivierung der Antriebsvorrichtung eine Beschleunigung der beiden Scheiben mittels der beiden Motoren auf die Solldrehzahl erfolgt. Beim Betrieb der Antriebsvorrichtung wird der Steuerungseinrichtung als Sollwert ein Maß für einen gewünschten Vorhub oder Rückhub der Antriebsvorrichtung vorgegeben, woraufhin die Steuerungseinrichtung einen den jeweiligen Vorhub oder Rückhub gewährleistenden Drehzahlunterschied bewirkt und im Zusammenhang mit dem Erreichen der Sollposition wieder gleiche Drehzahlen der beiden Scheiben bewirkt, insbesondere indem die Drehzahlen der beiden Scheiben auf die jeweilige Solldrehzahl zurückgeführt werden.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Das Ausführungsbeispiel ist nicht als Einschränkung der Erfindung zu verstehen. Vielmehr sind im Rahmen der vorliegenden Offenbarung durchaus auch Ergänzungen und Modifikationen möglich, insbesondere solche, die zum Beispiel durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen.

Es zeigen
- FIG 1: eine Explosionsdarstellung einer Antriebsvorrichtung,
- FIG 2: die Antriebsvorrichtung aus FIG 1 in einer Schnittdarstellung,
- FIG 3: ein Bewegungsprofil der Antriebsvorrichtung,
- FIG 4: eine Antriebsvorrichtung gemäß FIG 1 und FIG 2 mit Mitteln zur Umwandlung der linearen Bewegung der Antriebsvorrichtung in eine rotatorische Bewegung und
- FIG 5: eine Antriebsvorrichtung gemäß FIG 1 und FIG 2 mit der Ergänzung gemäß FIG 4.

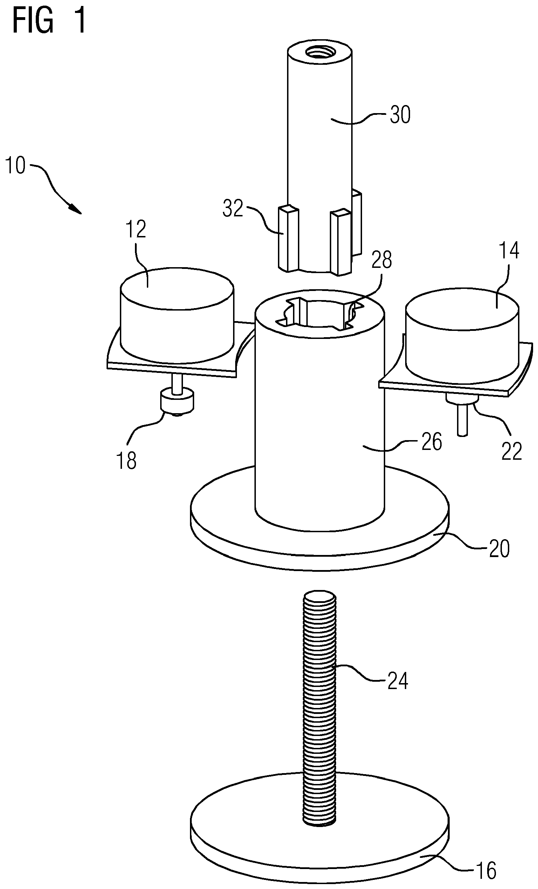

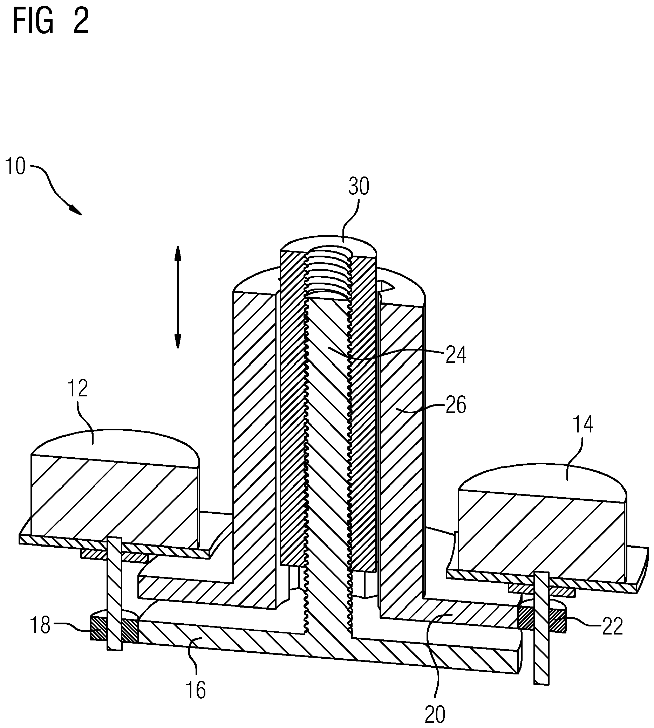

Die Darstellung in FIG 1 zeigt in einer schematisch vereinfachten Darstellung die wesentlichen Komponenten der hier vorgeschlagenen und als translatorischer Antrieb, insbesondere als Stellantrieb für ein Ventil, eine Klappe oder dergleichen, fungierenden Antriebsvorrichtung 10 in einer Explosionsdarstellung. Die Darstellung in FIG 2 zeigt die Antriebsvorrichtung 10 in einer Schnittdarstellung. Sämtliche Komponenten der Antriebsvorrichtung 10 können aus einem Kunststoff, wie z.B. Polyamid, und/oder aus Metall, wie z.B. Stahl, hergestellt sein.

Die Antriebsvorrichtung 10 umfasst einen ersten Motor 12 und einen zweiten Motor 14. Der erste Motor 12 wirkt auf eine drehbar gelagerte, kreisrunde erste Scheibe 16, d.h. ein mit der Antriebswelle des ersten Motors 12 verbundenes und mittels des ersten Motors 12 antreibbares und im Betrieb angetriebenes Ritzel 18 ist mit der ersten Scheibe 16 in einer Art und Weise verbunden, dass mittels des ersten Motors 12 ein Antrieb der ersten Scheibe 16 möglich ist und beim Betrieb des ersten Motors 12 erfolgt. Dafür sind das erste Ritzel 18 und die erste Scheibe 16 beispielsweise in an sich bekannter Art und Weise als Zahnräder mit einem Zahnprofil, insbesondere einem Zahnprofil entlang ihrer jeweiligen Außenumfangslinie, ausgeführt, sodass das erste Ritzel 18 und die erste Scheibe 16 in Form eines Zahneingriffs miteinander verbunden sind. Grundsätzlich kommt auch eine andere Art der Verbindung zwischen dem ersten Ritzel 18 und der ersten Scheibe 16 in Betracht, zum Beispiel eine reibschlüssige Verbindung.

Der zweite Motor 14 wirkt auf eine ebenfalls drehbar gelagerte und unabhängig von der ersten Scheibe 16 drehbare, kreisrunde zweite Scheibe 20, d.h. ein mit der Antriebswelle des zweiten Motors 14 verbundenes und mittels des zweiten Motors 14 antreibbares und im Betrieb angetriebenes Ritzel 22 ist mit der zweiten Scheibe 20 in einer Art und Weise verbunden, dass mittels des zweiten Motors 14 ein Antrieb der zweiten Scheibe 20 möglich ist und beim Betrieb des zweiten Motors 14 erfolgt. Dafür sind das zweite Ritzel 22 und die zweite Scheibe 20 beispielsweise in an sich bekannter Art und Weise als Zahnräder mit einem Zahnprofil, insbesondere einem Zahnprofil entlang ihrer jeweiligen Außenumfangslinie, ausgeführt, sodass das zweite Ritzel 22 und die zweite Scheibe 20 in Form eines Zahneingriffs miteinander verbunden sind. Grundsätzlich kommt auch eine andere Art der Verbindung zwischen dem zweiten Ritzel 22 und der zweiten Scheibe 20 in Betracht, zum Beispiel eine reibschlüssige Verbindung.

Mit der ersten Scheibe 16 ist drehfest eine im Folgenden kurz als Spindel 24 bezeichnete Gewindespindel verbunden. Die erste Scheibe 16 und die damit drehfest verbundene Spindel 24 bilden zusammen ein erstes Getriebeteil. Drehfest meint, dass bei einer Drehung der ersten Scheibe 16 eine entsprechende Drehung der Spindel 24 resultiert. Optional ist die Spindel 24 einstückig mit der ersten Scheibe 16 verbunden. Die Spindel 24 erhebt sich im Zentrum der ersten Scheibe 16 auf der ersten Scheibe 16 und eine Mittellängsachse der Spindel 24 verläuft senkrecht zu einer durch eine der ebenen Oberflächen der ersten Scheibe 16 definierten Ebene. Indem sich die Spindel 24 im Zentrum der ersten Scheibe 16 erhebt, fällt die Mittellängsachse der Spindel 24 mit der Drehachse der ersten Scheibe 16 zusammen.

Die Spindel 24 weist auf ihrer Oberfläche ein Gewindeprofil auf, nämlich ein in üblicher Art und Weise schraubenlinienförmiges Gewindeprofil. Bei der gezeigten Ausführungsform weist die Spindel 24 entlang ihrer gesamten Längserstreckung das Gewinde auf. Dies ist grundsätzlich optional. Genauso kann die Spindel 24 das Gewinde nur entlang eines Teils ihrer Längserstreckung, aber stets vom freien Ende der Spindel 24 ausgehend, aufweisen.

Mit der zweiten Scheibe 20 ist drehfest eine Führung 26 verbunden. Die zweite Scheibe 20 und die damit drehfest verbundene Führung 26 bilden zusammen ein zweites Getriebeteil. Drehfest meint, dass bei einer Drehung der zweiten Scheibe 20 eine entsprechende Drehung der Führung 26 resultiert. Optional ist die Führung 26 einstückig mit der zweiten Scheibe 20 verbunden. Die Führung 26 erhebt sich im Zentrum der zweiten Scheibe 20 auf der zweiten Scheibe 20 und eine Mittellängsachse der Führung 26 verläuft senkrecht zu einer durch eine der ebenen Oberflächen der zweiten Scheibe 20 definierten Ebene. Indem sich die Führung 26 im Zentrum der zweiten Scheibe 20 erhebt, fällt die Mittellängsachse der Führung 26 mit der Drehachse der zweiten Scheibe 20 zusammen.

Die Führung 26 ist im Innern hohl und weist in ihrem Innern ein Führungsprofil 28 auf. Bei der gezeigten Ausführungsform fungiert als Führung 26 ein Hohlzylinder. Dieser weist in seiner inneren Mantelfläche als Führungsprofil 28 mehrere in axialer Richtung des Hohlzylinders verlaufende und in der inneren Mantelfläche entlang von deren Umfangslinie regelmäßig beabstandete Rillen (längliche Vertiefungen; Nute) auf.

Eine Form als Hohlzylinder, also eine äußere zylindrische Kontur und eine innere zylindrische Kontur, ist grundsätzlich optional. Genauso kommen andere Geometrien in Betracht. Wichtig ist, dass die Führung 26 mit ihrem Führungsprofil 28 eine Führung einer als drittes Getriebeteil fungierenden Spindelmutter 30 und eine translatorische Bewegung der Spindelmutter 30 in der Führung 26 sowie entlang der Mittellängsachse der Führung 26 (in axialer Richtung der Führung 26) erlaubt. Jedenfalls ist die Spindelmutter 30 (drittes Getriebeteil) aufgrund des Führungsprofils 28 relativ zur Führung 26 (zweites Getriebeteil) axial/translatorisch beweglich und Spindelmutter 30 und Führung 26 (zweites und drittes Getriebeteil) wirken in Form von und nach Art eines Schubgelenks zusammen.

Die Spindelmutter 30 weist ein zum Gewinde der Spindel 24 passendes Innengewinde (FIG 2) und auf ihrer Außenoberfläche ein formschlüssig in das Führungsprofil 28 der Führung 26 einsetzbares Führungsgegenprofil 32 auf. Bei der gezeigten Ausführungsform fungiert als Führungsgegenprofil 32 eine der Anzahl der Rillen im Führungsprofil 28 entsprechende Anzahl von Rippen mit einer Orientierung parallel zur Längsachse der Spindelmutter 30. Grundsätzlich sind eine Rille als Führungsprofil 28 und eine Rippe als Führungsgegenprofil 32 ausreichend. Selbst bei einer Mehrzahl von Rillen als Führungsprofil 28 ist eine einzelne Rippe als Führungsgegenprofil 32 ausreichend. Eine gleiche Anzahl von Rillen und Rippen erhöht die mechanische Belastbarkeit der Antriebsvorrichtung 10.

Eine wie in der Darstellung in FIG 2 gezeigt in der Führung 26 platzierte Spindelmutter 30 dreht mit der Führung 26, wenn das Führungsprofil 28 der Führung 26 und das Führungsgegenprofil 32 der Spindelmutter 30 miteinander im Eingriff sind.

Als Führungsprofil 28 in der Führung 26 kommt zum Beispiel auch eine zentrale, axiale Vierkantbohrung in Betracht. Als Führungsgegenprofil 32 fungiert dann ein formschlüssig in eine solche Vierkantbohrung passender (axialer) Abschnitt der Spindelmutter 30. Anstelle einer Vierkantbohrung in der Führung 26 und einem passenden Abschnitt der Spindelmutter 30 kommt jede polygonale Form, aber zum Beispiel auch eine Form mit einem elliptischen Querschnitt in Betracht, letztlich jede Form, welche die Spindelmutter 30 in der Führung 26 translatorisch beweglich (Schubgelenk), aber gleichzeitig drehfest mit der Führung 26 verbunden hält. Drehfest verbunden meint, dass eine Drehung der Führung 26 eine entsprechende Drehung der Spindelmutter 30 in/mit der Führung 26 bewirkt. Die Funktion als Schubgelenk bei gleichzeitig drehfester Verbindung ist zum Beispiel auch gegeben, wenn die Führung 26 und die Spindelmutter 30 auf ihren einander zugewandten Oberflächen jeweils zumindest eine Rollenbahn (schraubenlinienförmig umlaufend bei mindestens einer Rollenbahn; in Umfangsrichtung regelmäßig beabstandet bei zumindest zwei geradlinigen, insbesondere axialen Rollenbahnen) aufweisen. Aufgrund der Vielzahl der grundsätzlichen Möglichkeiten der einerseits drehfesten und andererseits translatorisch beweglichen Lagerung der Spindelmutter 30 in der Führung 26 rechtfertigt sich die allgemeine Beschreibung als drehfestes Schubgelenk.

Bei der gezeigten Ausführungsform befinden sich der erste Motor 12 und der zweite Motor 14 auf gegenüberliegenden Seiten der Spindel 24 (um 180° versetzt). Wenngleich dies keine Notwendigkeit ist, ergibt sich dadurch ein hinsichtlich der Massenverteilung, auch der ruhenden Massen, günstiger symmetrischer Aufbau.

Beim Betrieb der Antriebsvorrichtung 10 treiben die beiden Motoren 12, 14 die beiden Scheiben 16, 20 an, versetzen diese in Rotation und bewirken damit eine Drehung der mit der ersten Scheibe 16 drehfest verbundenen Spindel 24 sowie eine Drehung der mit der zweiten Scheibe 20 drehfest verbundenen Führung 26. Aufgrund des Eingriffs des Führungsgegenprofils 32 der Spindelmutter 30 in das Führungsprofil 28 der Führung 26 bewirkt eine Rotation der zweiten Scheibe 20 auch eine Drehung der in der Führung 26 platzierten Spindelmutter 30. Die Drehrichtung beider Scheiben 16, 20 ist gleich. Folglich ist auch die Drehrichtung der Spindel 24, der Führung 26 und der Spindelmutter 30 gleich.

Die Spindelmutter 30 ist anfänglich zumindest zum Teil auf das Gewinde der Spindel 24 aufgeschraubt, zum Beispiel in einer Art und Weise wie dies in der Darstellung in FIG 2 gezeigt ist. Eine alleinige Drehung der ersten Scheibe 16 führt dazu, dass die Spindel 24 weiter in die Spindelmutter 30 hineingeschraubt wird (bei einer wie gezeigt lotrecht nach oben weisenden Spindel 24 sinkt die Spindelmutter 30 an der Spindel 24 herab). Eine alleinige Drehung der zweiten Scheibe 20 führt dazu, dass die Spindel 24 aus der Spindelmutter 30 herausgeschraubt wird (bei einer lotrecht nach oben weisenden Spindel 24 steigt die Spindelmutter 30 entlang der Spindel 24 empor). Die beiden geschilderten Bewegungsmöglichkeiten sind in der Darstellung in FIG 2 durch den zur Drehachse der Spindel 24 parallelen und neben der Führung 26 eingezeichneten Doppelpfeil veranschaulicht.

Eine gleichzeitige Drehung der ersten Scheibe 16 und der zweiten Scheibe 20 - eine gleichzeitige Drehung des ersten Getriebeteils und des zweiten Getriebeteils - mit gleichen Drehzahlen führt gewissermaßen dazu, dass gleichzeitig mit dem Hineinschrauben der Spindel 24 in die Spindelmutter 30 aufgrund der Drehung der ersten Scheibe 16 im selben Umfang ein Herausschrauben der Spindel 24 aus der Spindelmutter 30 aufgrund der Drehung der zweiten Scheibe 20 erfolgt. Bei einer gleichzeitigen Drehung der ersten Scheibe 16 und der zweiten Scheibe 20 mit gleichen Drehzahlen ändert sich also die axiale Position der Spindelmutter 30 an der Spindel 24 nicht. Bei unterschiedlichen Drehzahlen der ersten und der zweiten Scheibe 16, 20 überwiegt entweder das Hineinschrauben der Spindel 24 in die Spindelmutter 30 (höhere Drehzahl der ersten Scheibe 16) oder das Herausschrauben der Spindel 24 aus der Spindelmutter 30 (höhere Drehzahl der zweiten Scheibe 20). Unterschiedliche Drehzahlen der ersten und der zweiten Scheibe 16, 20 führen damit zu einer Bewegung der Spindelmutter 30 entlang der Spindel 24. Aufgrund dieser axialen (translatorischen) Beweglichkeit der Spindelmutter 30 fungiert diese als Schubstange der Antriebsvorrichtung 10.

Je höher der Unterschied zwischen der Drehzahl der ersten Scheibe 16 und der Drehzahl der zweiten Scheibe 20 ist, umso schneller bewegt sich die Spindelmutter 30 entlang der Spindel 24. Die Geschwindigkeit der axialen Bewegung der Spindelmutter 30 entlang der Spindel 24 ist also proportional zum Verhältnis der Drehzahlen der ersten und zweiten Scheibe 16, 20. Eine mittels der angetriebenen Spindelmutter 30 ausübbare Kraft ist proportional zu den Drehzahlen selbst: Je höher die Drehzahlen, umso höher die ausübbare Kraft. Eine Drehzahl von 30 Umdrehungen/min der ersten Scheibe 16 und eine Drehzahl von 35 Umdrehungen/min der zweiten Scheibe 20 führt zu derselben axialen Geschwindigkeit (und derselben Bewegungsrichtung) der Spindelmutter 30 wie eine Drehzahl von 100 Umdrehungen/min der ersten Scheibe 16 und einer Drehzahl von 105 Umdrehungen/min der zweiten Scheibe 20. Bei den höheren Drehzahlen ist allerdings die mittels der angetriebenen Spindelmutter 30 ausübbare Kraft größer als bei den niedrigeren Drehzahlen.

Die zum Beispiel als Getriebe eines Stellantriebs fungierende Antriebsvorrichtung 10 kann in der gezeigten Ausführungsform mit anderen Worten auch wie folgt beschrieben werden: Die Antriebsvorrichtung 10 umfasst ein erstes Getriebeteil (erste Scheibe 16 und Spindel 24) sowie ein zweites Getriebeteil (zweite Scheibe 20 und Führung 26). Beide Getriebeteile sind um eine gemeinsame Getriebeachse jeweils drehbeweglich sowie axial und insbesondere radial fixiert angeordnet. Das zweite Getriebeteil ist koaxial außenliegend zum ersten Getriebeteil angeordnet. Die beiden Getriebeteile sind mittels jeweils eines Motors 12, 14 zumindest mittelbar antreibbar und werden beim Betrieb der Antriebsvorrichtung 10 mittels jeweils eines Motors 12, 14 zumindest mittelbar angetrieben. Die Antriebsvorrichtung 10 umfasst ein drittes Getriebeteil (Spindelmutter 30), welches koaxial zwischen dem ersten und zweiten Getriebeteil angeordnet ist, wobei das dritte Getriebeteil axial beweglich, drehfest und insbesondere radial fixiert im zweiten Getriebeteil gelagert ist. Das erste Getriebeteil umfasst in Form der Spindel 24 eine mit der Getriebeachse fluchtende, sich axial erstreckende und zum dritten Getriebeteil koaxial innenliegende Gewindestange. Die Gewindestange weist ein sich axial erstreckendes Außengewinde auf. Das Außengewinde der Gewindestange ist mit einem Innengewinde des dritten Getriebeteils, nämlich mit dem Innengewinde der Führung 26, im Eingriff. Ein axiales freies Endstück des dritten Getriebeteils (der Spindelmutter 30) ist zum Beispiel zumindest mittelbar mit dem Stellanschluss verbunden oder bildet einen solchen Stellanschluss. Dann fungiert die Antriebsvorrichtung 10 zum Beispiel in einem Stellantrieb, insbesondere für eine Klappe oder für ein Ventil zum Einstellen eines gasförmigen oder flüssigen Volumenstroms, als Getriebe und der Stellantrieb weist zwei Motoren 12, 14, den Motoren 12, 14 nachgeschaltet die Antriebsvorrichtung 10 (Getriebe) sowie dem Getriebe nachgeschaltet einen Stellanschluss zum Anschließen an der Klappe oder an dem Ventil auf und ist zum Beispiel in einem Gehäuse, dem Stellantriebsgehäuse, angeordnet. Beim Betrieb des Stellantriebs führt das dritte Getriebeteil (die Spindelmutter 30), welches axial beweglich und drehfest im zweiten Getriebeteil (in der Führung 26) gelagert ist, eine lineare axiale Stellbewegung aus, wenn das erste Getriebeteil und das zweite Getriebeteil mit unterschiedlichen Drehzahlen rotieren.

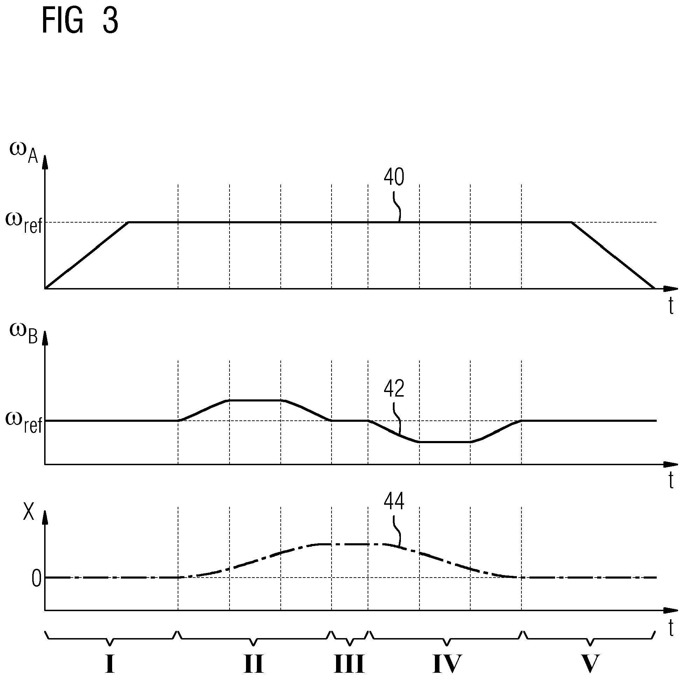

Die Darstellung in FIG 3 zeigt über einer Zeitachse jeweils einen Graph 40, 42 der aufgrund eines Antriebs mittels des jeweiligen Motors 12, 14 resultierenden Drehzahlen der beiden Scheiben 16, 20. Die Drehzahl der ersten und zweiten Scheibe 16, 20 (Drehzahl des ersten und zweiten Getriebeteils) werden im Folgenden symbolisch mit ω_{A} und ω_{B} bezeichnet. Darunter ist - über derselben Zeitachse - ein Graph 44 einer aufgrund der Drehzahlen der beiden Scheiben 16, 20 resultierenden axialen Position x der Spindelmutter 30 gezeigt.

In einem ersten zeitlichen Abschnitt I sind die Drehzahlen ω_{A}, ω_{B} der beiden Scheiben 16, 20 gleich, wobei die Rotationsgeschwindigkeit von einem anfänglichen Stillstand der beiden Scheiben 16, 20 bis zu einer hier symbolisch mit ω_{ref} bezeichneten, vorgegebenen oder vorgebbaren und optional veränderlichen Solldrehzahl erhöht wird. Weil die Drehzahlen ω_{A}, ω_{B} während des gesamten ersten Abschnitts I gleich sind, ergibt sich keine axiale Bewegung der Spindelmutter 30 (x=0) und die Spindelmutter 30 steht in axialer Richtung still, obwohl beide Scheiben 16, 20 rotieren.

In einem an den ersten zeitlichen Abschnitt I anschließenden zweiten zeitlichen Abschnitt II ergibt sich ein Unterschied zwischen den Drehzahlen ω_{A}, ω_{B} der beiden Scheiben 16, 20. Bei der exemplarisch gezeigten Situation ist die Drehzahl ω_{B} der zweiten Scheibe 20 größer als die Drehzahl ω_{A} der ersten Scheibe 16 und steigt ausgehend von der Solldrehzahl ω_{ref} zunächst linear an, bleibt dann für eine gewisse Zeit oberhalb der Solldrehzahl ω_{ref} konstant und sinkt anschließend wieder linear bis zur Solldrehzahl ω_{ref} ab. Die Drehzahlunterschiede (ω_{A} < ω_{B}) führen zu einer axialen Bewegung der Spindelmutter 30 entlang der Spindel 24 (die Spindelmutter 30 wird "ausgefahren"; x > 0; Vorhub der Antriebsvorrichtung 10). Die maximale Geschwindigkeit der axialen Bewegung der Spindelmutter 30 ergibt sich während des maximalen Unterschieds der Drehzahlen ω_{A}, ω_{B}, also während die Drehzahl ω_{B} oberhalb der Solldrehzahl ω_{ref} konstant ist.

Während eines an den zweiten zeitlichen Abschnitt II anschließenden dritten zeitlichen Abschnitts III sind die Drehzahlen ω_{A}, ω_{B} der beiden Scheiben 16, 20 wieder gleich. Aufgrund der Gleichheit der beiden Drehzahlen ω_{A}, ω_{B} bleibt die axiale Position x der Spindelmutter 30 konstant. Die ausgefahrene Position der Spindelmutter 30 bleibt also erhalten.

In einem an den dritten zeitlichen Abschnitt III anschließenden vierten zeitlichen Abschnitt IV ergibt sich erneut ein Unterschied zwischen den Drehzahlen ω_{A}, ω_{B} der beiden Scheiben 16, 20. Bei der exemplarisch gezeigten Situation ist die Drehzahl ω_{B} der zweiten Scheibe 20 kleiner als die Drehzahl ω_{A} der ersten Scheibe 16 und fällt ausgehend von der Solldrehzahl ω_{ref} zunächst linear, bleibt dann für eine gewisse Zeit unterhalb der Solldrehzahl ω_{ref} konstant und steigt anschließend wieder linear bis zur Solldrehzahl ω_{ref} an. Die Drehzahlunterschiede führen erneut - diesmal wegen ω_{A} > ω_{B} in entgegengesetzter Richtung - zu einer axialen Bewegung der Spindelmutter 30 entlang der Spindel 24 (die Spindelmutter 30 wird wieder "eingefahren"; Rückhub der Antriebsvorrichtung 10). Die maximale Geschwindigkeit der axialen Bewegung der Spindelmutter 30 ergibt sich während des maximalen Unterschieds der Drehzahlen ω_{A}, ω_{B}, also während die Drehzahl ω_{B} oberhalb der Solldrehzahl ω_{ref} konstant ist.

Dieselbe Einfahrbewegung würde sich im Übrigen auch ergeben, wenn - anders als dargestellt - im vierten zeitlichen Abschnitt IV nicht die Drehzahl ω_{B} der zweiten Scheibe 20 unter die Solldrehzahl ω_{ref} fallen würde, sondern vielmehr die Drehzahl ω_{A} der ersten Scheibe 16 mit demselben Trapezprofil wie im zweiten zeitlichen Abschnitt II oder mit dem gespiegelten, aber ansonsten identischen Trapezprofil wie im vierten zeitlichen Abschnitt IV über die Solldrehzahl ω_{ref} angehoben wird.

In diesem Zusammenhang erscheint es wichtig, darauf hinzuweisen, dass für eine Einfahr- oder Ausfahrbewegung der Spindelmutter 30 nicht notwendig die Drehzahl ω_{A}, ω_{B} einer der beiden Scheiben 16, 20 bei der Solldrehzahl ω_{ref} verharren muss. Ein Drehzahlunterschied (ω_{A} ≠ ω_{B}) zum Auslösen einer Einfahroder Ausfahrbewegung kann selbstverständlich auch dadurch ausgelöst werden, dass die Drehzahl ω_{A}, ω_{B} einer der beiden Scheiben 16, 20 unter die Solldrehzahl ω_{ref} sinkt (zum Beispiel ω_{A} < ω_{ref}), während die Drehzahl ω_{A}, ω_{B} der anderen Scheibe 16, 20 über die Solldrehzahl steigt (zum Beispiel ω_{B} > ω_{ref}). Genauso kann ein Drehzahlunterschied erzeugt werden, wenn beide Drehzahlen ω_{A}, ω_{B} über der Solldrehzahl ω_{ref} liegen (ω_{A} > ω_{ref} ; ω_{B} > ω_{ref}; ω_{A} ≠ ω_{B}) oder beide Drehzahlen ω_{A}, ω_{B} unter der Solldrehzahl ω_{ref} liegen (ω_{A} < ω_{ref}; ω_{B} < ω_{ref}; ω_{A} ≠ω_{B}).

In einem abschließenden, an den vierten zeitlichen Abschnitt IV anschließenden fünften zeitlichen Abschnitt V werden die Motoren 12, 14 schließlich gestoppt und entsprechend kommen am Ende des fünften zeitlichen Abschnitts V die beiden Scheiben 16, 20 zum Stillstand (ω_{A} = ω_{B} = 0). Während des gesamten fünften zeitlichen Abschnitts V sind die Drehzahlen der beiden Scheiben 16, 20 gleich, sodass sich die axiale Position x der Spindelmutter 30 nicht ändert.

Der in FIG 3 gezeigte Verlauf der Drehzahlen ω_{A}, ω_{B} der beiden Scheiben 16, 20 ist selbstverständlich nur exemplarisch. Auch der exemplarische Drehzahlverlauf macht deutlich, dass mittels einer gesteuerten oder geregelten Änderung der Drehzahl einer der beiden Scheiben 16, 20 relativ zur Drehzahl der anderen Scheibe 16, 20 eine Einfahrbewegung oder eine Ausfahrbewegung der Spindelmutter 30 ausgelöst werden kann. Die Ein- oder Ausfahrbewegung ergibt sich unmittelbar in dem Moment, in dem ein Drehzahlunterschied (ω_{A} ≠ ω_{B}) auftritt. Anders als zum Beispiel bei einer für eine axiale Bewegung direkt motorisch angetriebenen Spindelmutter 30 entsteht kein Zeitverzug aufgrund einer Anlaufphase des Motors oder dergleichen.

Durch ein Ein- oder Ausfahren der Spindelmutter 30 kann zum Beispiel eine Lüftungsklappe oder dergleichen geöffnet oder geschlossen werden. Auf diese Weise kann zum Beispiel im Rahmen einer Gebäudeautomatisierung im Falle eines Brandes eine Lüftungsklappe geöffnet oder geschlossen werden.

Das Anfahren der beiden Motoren 12, 14 bis zum Erreichen der Solldrehzahl ω_{ref} der beiden Scheiben 16, 20 - wie dies im ersten zeitlichen Abschnitt I gezeigt ist - kann als Anfahren oder Aktivieren der Antriebsvorrichtung 10 aufgefasst werden. Das Herunterfahren der beiden Motoren 12, 14 bis zum Stillstand der beiden Scheiben 16, 20 - wie dies im fünften zeitlichen Abschnitt V gezeigt ist - kann als Herunterfahren oder Deaktivieren der Antriebsvorrichtung 10 aufgefasst werden. Zwischen dem Anfahren und dem Herunterfahren der Antriebsvorrichtung 10 können beliebige axiale Bewegungen der Spindelmutter 30 ausgelöst werden.

Jede axiale Bewegung der Spindelmutter 30 führt je nach Bewegungsrichtung der Spindelmutter 30 entlang der Spindel 24 zu einem Vorhub oder einem Rückhub der Antriebsvorrichtung 10. Die Hubrichtung (vertikal, horizontal, diagonal) ist dabei beliebig und wird durch die Orientierung der Antriebsvorrichtung 10 und der Spindel 24 der Antriebsvorrichtung 10 bestimmt. Die Antriebsvorrichtung 10 kann - wie in FIG 1 und FIG 2 gezeigt - lotrecht betrieben werden, aber genauso auch in jeder anderen Orientierung. Wenn oben festgehalten wurde, dass mit der Antriebsvorrichtung 10 beliebige axiale Bewegungen der Spindelmutter 30 ausgelöst werden können, bedeutet dies zum Beispiel eine axiale Bewegung entlang einer bestimmten Strecke (Hub) in einer bestimmten Richtung (Vorhub oder Rückhub) durch Einstellen eines Drehzahlunterschieds der beiden Scheiben 16, 20 für eine entsprechende Zeit und/oder eine axiale Bewegung mit einer bestimmten Geschwindigkeit in einer bestimmten Richtung durch Einstellung eines entsprechenden Drehzahlunterschieds der beiden Scheiben 16, 20. Durch die zeitliche Dauer, während derer der Drehzahlunterschied besteht, kann also der Hub (die ein- oder ausgefahrene Länge der Spindelmutter 30) eingestellt werden. Durch die Auswahl einer der beiden Scheiben 16, 20 als "schnellere" (höhere Drehzahl) Scheibe 16, 20 kann die Richtung des Hubs eingestellt werden. Durch Einstellen des Drehzahlunterschieds der beiden Scheiben 16, 20 kann die Hubgeschwindigkeit eingestellt werden. Während des Betriebs der Antriebsvorrichtung 10 kann die Solldrehzahl ω_{ref} der beiden Scheiben 16, 20 grundsätzlich beliebig verändert werden und durch eine Anpassung der Solldrehzahl ω_{ref} ist eine Einstellung der mit einem Hub ausübbaren Kraft möglich (höhere Solldrehzahl ω_{ref}: größere ausübbare Kraft; kleinere Solldrehzahl ω_{ref}: geringere ausübbare Kraft, wenn ausgehend von der jeweiligen Solldrehzahl ω_{ref} ein Drehzahlunterschied eingestellt wird.

In der Darstellung in FIG 2 ist erkennbar, dass die erste Scheibe 16 und die zweite Scheibe 20 in parallelen Ebenen drehen und bei der gezeigten Ausführungsform in grundsätzlich optionaler Art und Weise denselben Durchmesser haben. Gleiche Durchmesser der beiden Scheiben 16, 20 erlauben eine leichtere Einhaltung identischer Drehzahlen ω_{A}, ω_{B} der beiden Scheiben 16, 20, zum Beispiel durch eine elektrische Kopplung der beiden Motoren 12, 14, nämlich eine elektrische Kopplung der felderzeugenden Elemente der beiden dann als Synchronmotoren ausgeführten Motoren 12, 14, welche zur Einstellung eines Drehzahlunterschieds temporär wieder aufgehoben wird.

Die vom ersten und zweiten Motor 12, 14 angetriebenen Ritzel 18, 22 befinden sich an einer jeweiligen Antriebswelle des Motors 12, 14 in einer einen Antrieb der jeweiligen Scheibe 16, 20 erlaubenden Position, hier einer einen solchen Antrieb erlaubenden axialen Position an der Antriebswelle. Dabei ist darauf hinzuweisen, dass die bei der gezeigten Ausführungsform gegebene Orientierung der Antriebswellen der beiden Motoren 12, 14 parallel zur Drehachse der Spindel 24 nur eine von mehreren Möglichkeiten ist. Genauso kommt ein Antrieb der Scheiben 16, 20 mittels einer Kronen- oder Kegelradverzahnung in Betracht. Dann sind alle bei einer solchen Verzahnung möglichen Orientierungen der Antriebswellen der beiden Motoren 12, 14 relativ zur Drehachse der Spindel 24 möglich, insbesondere eine Orientierung der Antriebswellen senkrecht zur Orientierung/Drehachse der Spindel 24.

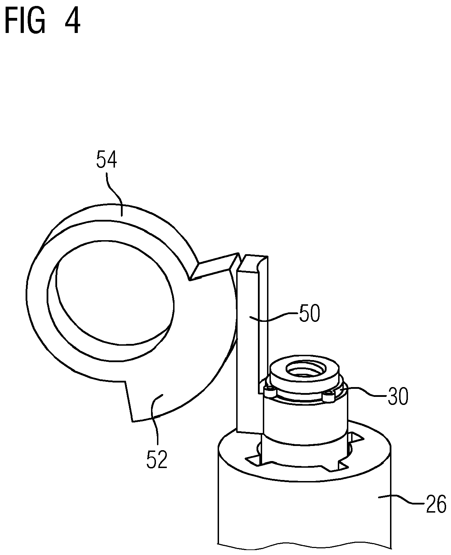

Die Darstellung in FIG 4 zeigt einen aus der Führung 26 herausragenden Abschnitt der Spindelmutter 30 der Antriebsvorrichtung 10 gemäß FIG 1 und FIG 2. An der Spindelmutter 30 ist mittels eines die Spindelmutter 30 umschließenden Rings eine in axiale Richtung der Spindelmutter 30 weisende Zahnstange 50 oder dergleichen angebracht (ein Zahnprofil der Zahnstange 50 ist nicht gezeigt). Die Zahnstange 50 ist mit einem entsprechend gezahnten Nocken 52 an einem drehbar gelagerten Rad 54 im Eingriff. Anstelle eines Rads 54 mit einem gezahnten Nocken 52 kommt grundsätzlich auch ein Zahnrad mit einem umlaufenden Zahnprofil in Betracht. Anstelle einer an der Spindelmutter 30 angebrachten Zahnstange 50 kommt auch ein entsprechendes Profil auf der Außenoberfläche der Spindelmutter 30 in Betracht, also zum Beispiel ein Zahnprofil oder ein Gewinde. An die Stelle des Rads 54 tritt dann ein nicht gezeigtes Zahnrad, welches in das Gewinde bzw. das Zahnprofil der Spindelmutter 30 eingreift, wie dies in der älteren Anmeldung derselben Anmelderin mit dem Titel "Stellantrieb mit einem Differenzgetriebe zum Einstellen eines vorgebbaren linearen Stellwegs" und dem internen Aktenzeichen 201710730 gezeigt ist. Anstelle eines Zahneingriffs kommt grundsätzlich auch eine reibschlüssige Verbindung in Betracht. Mit dem Verweis auf die genannte ältere Anmeldung soll diese mit ihrem gesamten Offenbarungsgehalt, zumindest jedoch in Bezug auf die Ankopplung einer mittels der Antriebsvorrichtung 10 antreibbaren Vorrichtung an die Antriebsvorrichtung 10 und deren axial bewegliches Getriebeteil (drittes Getriebeteil; Spindelmutter 30), als in die hier vorgelegte Beschreibung aufgenommen gelten.

Bei der gezeigten Ausführungsform bewirkt eine axiale Bewegung der Spindelmutter 30 eine Drehung des Rads 54, wobei ein Vorhub der Spindelmutter 30 eine Drehung des Rads 54 in eine erste Richtung und ein Rückhub der Spindelmutter 30 eine Drehung des Rads 54 in eine entgegengesetzte, zweite Richtung bewirkt.

Die Darstellung in FIG 4 ist ein Beispiel für eine Möglichkeit zur Umwandlung der axialen/translatorischen Bewegung der Spindelmutter 30 (des dritten Getriebeteils) in eine Drehbewegung. Das Rad 54 kann eine Drehung einer nicht gezeigten Achse auslösen. Die Achse kann auf einen Inkrementalgeber oder einen vergleichbaren Sensor wirken und ein Sensorsignal von einem solchen Sensor kann für eine Regelung der Bewegung der Antriebsvorrichtung 10 genutzt werden. Die Achse kann zusätzlich oder alternativ eine Achse einer dreh- oder schwenkbeweglichen Vorrichtung sein, zum Beispiel eine Achse einer Klappe, insbesondere einer Lüftungsklappe, oder eines Ventils zum Einstellen eines gasförmigen oder flüssigen Volumenstroms, sodass aufgrund einer mittels der Antriebsvorrichtung 10 ausgelösten translatorischen Bewegung eine Dreh- oder Schwenkbewegung einer mechanisch mit der Antriebsvorrichtung 10 verbundenen Vorrichtung resultiert.

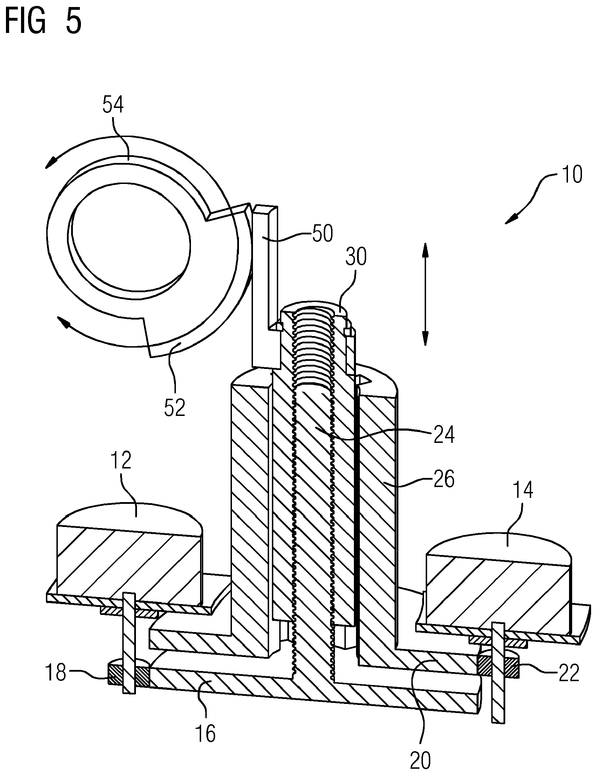

Die Darstellung in FIG 5 zeigt die Antriebsvorrichtung 10 gemäß FIG 1 und FIG 2 in einer Schnittdarstellung wie in FIG 2 und in einer Kopplung mit einem drehbaren Rad 54 gemäß FIG 4. Der vertikale Doppelpfeil veranschaulicht die axiale/translatorische Beweglichkeit der Spindelmutter 30 und der kreisbogenförmige Doppelpfeil veranschaulicht die aufgrund einer solchen Bewegung resultierende Drehbarkeit des Rads 54. Die Antriebsvorrichtung 10 gemäß FIG 1 und FIG 2 ist eine translatorisch wirksame Antriebsvorrichtung 10. Die Antriebsvorrichtung 10 gemäß FIG 5 ist eine rotatorisch wirksame Antriebsvorrichtung 10 oder eine rotatorisch und translatorisch wirksame Antriebsvorrichtung 10.

Anstelle einer Umwandlung der axialen/translatorischen Bewegung der Spindelmutter 30 (des dritten Getriebeteils) in eine Drehbewegung kommt auch in Betracht, die Spindelmutter 30 mittels eines Drehlagers in ein mittels der Führung 26 drehbares Teilstück und ein daran anschließendes drehfreies Teilstück zu unterteilen, wie dies ebenfalls in der oben genannten älteren Anmeldung beschrieben ist und die mit diesem Hinweis auch in Bezug auf eine solche axiale Unterteilung als in diese Beschreibung aufgenommen gelten soll.

Eine Lagerung der ersten Scheibe 16 und der zweiten Scheibe 20 (des ersten und zweiten Getriebeteils) ist hier nicht gezeigt. Grundsätzlich kommt jede mögliche Form der Lagerung, welche eine Drehbewegung der ersten Scheibe 16 um die Mittellängsachse der Spindel 24 bzw. eine Drehbewegung der zweiten Scheibe 20 um die Mittellängsachse der Führung 26 erlaubt, in Betracht. Die beiden Getriebeteile (erstes und zweites Getriebeteil) können zum Beispiel in einem gemeinsamen Gehäuse gelagert sein. Speziell die Führung 26 kann optional an mehreren Stellen entlang ihrer Längsachse gelagert sein, zum Beispiel mittels zweier oder mehrerer Wälzlager in O-Anordnung oder X-Anordnung. Eines oder mehrere der zumindest zwei Wälzlager ist zum Beispiel ein einreihiges Schrägkugellager oder ein Axiallager. Alternativ kommen auch zumindest zwei Kegelrollenlager in Betracht. Eine solche mehrfache Lagerung der Führung 26 bewirkt eine sichere axiale Fixierung der Antriebsvorrichtung 10.

Obwohl die Erfindung im Detail durch das Ausführungsbeispiel näher illustriert und beschrieben wurde, so ist die Erfindung nicht durch das oder die offenbarten Beispiele eingeschränkt und andere Variationen können vom Fachmann hieraus abgeleitet werden, ohne den Schutzumfang der Erfindung zu verlassen.

Einzelne im Vordergrund stehende Aspekte der hier eingereichten Beschreibung lassen sich damit kurz wie folgt zusammenfassen: Angegeben werden eine Antriebsvorrichtung 10 und ein Verfahren zum Betrieb einer Antriebsvorrichtung 10. Die Antriebsvorrichtung 10 umfasst eine drehbare Spindel 24, eine an der Spindel 24 gelagerte Spindelmutter 30, eine Führung 26 sowie eine antreibbare erste Scheibe 16 und eine ebenfalls und unabhängig von der ersten Scheibe 16 antreibbare zweite Scheibe 20. Die Spindel 24 ist mittels der ersten Scheibe 16 drehbar (erstes Getriebeteil). Die Spindelmutter 30 ist mittels der Führung 26 relativ zur Spindel 24 drehbar. Die Führung 26 ist mittels der zweiten Scheibe 20 drehbar (zweites Getriebeteil) und die Spindelmutter 30 (drittes Getriebeteil) ist relativ zur Führung 26 axial beweglich. Die Spindelmutter 30 ist durch Einstellung unterschiedlicher Drehzahlen der beiden Scheiben 16, 20 (unterschiedlicher Drehzahlen des ersten und zweiten Getriebeteils) in axialer Richtung entlang der Spindel 24 beweglich und wird bei einem Verfahren zum Betrieb der Antriebsvorrichtung 10 durch Einstellung unterschiedlicher Drehzahlen der beiden Scheiben 16, 20 in axialer Richtung entlang der Spindel 24 bewegt.

Die hier vorgeschlagene Antriebsvorrichtung 10 kommt in motorisch angetriebener Form bevorzugt zur Verwendung als Stellantrieb oder in einem Stellantrieb, insbesondere für eine Klappe oder für ein Ventil, zum Beispiel zum Einstellen eines gasförmigen oder flüssigen Volumenstroms, in Betracht. Ein solcher Stellantrieb umfasst zumindest die beiden Motoren 12, 14, eine den Motoren 12, 14 nachgeschaltete und als Getriebe des Stellantriebs fungierende Antriebsvorrichtung 10 (wie hier oder im allgemeinen Beschreibungsteil beschrieben) sowie einen der Antriebsvorrichtung 10 nachgeschalteten Stellanschluss zum Anschließen an der Klappe oder an dem Ventil.

### Bezugszeichenliste

- 10: Antriebsvorrichtung
- 12: (erster) Motor
- 14: (zweiter) Motor
- 16: (erste) Scheibe
- 18: (erstes) Ritzel
- 20: (zweite) Scheibe
- 22: (zweites) Ritzel
- 24: Spindel
- 26: Führung
- 28: Führungsprofil
- 30: Spindelmutter
- 32: Führungsgegenprofil

- 40: Graph
- 42: Graph
- 44: Graph

- 50: Zahnstange
- 52: Nocken
- 54: Rad

## Patentansprüche

1. Antriebsvorrichtung (10) mit einer drehbaren Spindel (24) und einer an der Spindel (24) gelagerten Spindelmutter (30),
- wobei die Spindel (24) mittels einer antreibbaren ersten Scheibe (16) drehbar ist,
- wobei die Spindelmutter (30) mittels einer Führung (26) relativ zur Spindel (24) drehbar ist,
- wobei die Führung (26) mittels einer antreibbaren zweiten Scheibe (20) drehbar ist,
- wobei die Spindelmutter (30) relativ zur Führung (26) axial beweglich ist und
- wobei die erste Scheibe (16) mittels eines ersten Motors (12) und die zweite Scheibe (20) mittels eines zweiten Motors (14) drehbar ist.

2. Antriebsvorrichtung (10) nach Anspruch 1, wobei die Spindelmutter (30) in der Führung (26) einerseits drehfest und andererseits translatorisch beweglich gelagert ist.

3. Antriebsvorrichtung (10) nach Anspruch 1 oder 2, wobei die Spindelmutter (30) mittels der Führung (26) relativ zur Spindel (24) drehbar ist, indem ein Führungsgegenprofil (32) der Spindelmutter (30) mit einem Führungsprofil (28) der Führung (26) zusammenwirkt.

4. Antriebsvorrichtung (10) nach Anspruch 2 oder 3,
- wobei die Führung (26) zumindest einen axialen Abschnitt der Spindel (24) sowie zumindest einen axialen Abschnitt der Spindelmutter (30) umschließt und in einer einer Außenoberfläche der Spindelmutter (30) zugewandten Innenoberfläche das Führungsprofil (28) aufweist und
- wobei die Spindelmutter (30) in ihrer Außenoberfläche das Führungsgegenprofil (32) aufweist.

5. Antriebsvorrichtung (10) nach einem der vorangehenden Ansprüche,
- wobei sich die Spindel (24) mittig auf der ersten Scheibe (16) erhebt und senkrecht zu einer der ebenen Flächen der ersten Scheibe (16) orientiert ist und
- wobei sich die Führung (26) koaxial mit der Spindel (24) mittig auf der zweiten Scheibe (20) erhebt und senkrecht zu einer der ebenen Flächen der zweiten Scheibe (20) orientiert ist.

6. Antriebsvorrichtung (10) nach einem der vorangehenden Ansprüche, wobei die Spindel (24) einstückig mit der ersten Scheibe (16) verbunden ist und/oder die Führung (26) einstückig mit der zweiten Scheibe (20) verbunden ist.

7. Antriebsvorrichtung (10) nach einem der vorangehenden Ansprüche, wobei die erste und die zweite Scheibe (16, 18) mittels des ersten Motors (12) bzw. des zweiten Motors (14) gleichzeitig und unabhängig voneinander drehbar sind.

8. Antriebsvorrichtung (10) nach einem der vorangehenden Ansprüche, wobei der erste Motor (12) mittels eines ersten Ritzels (18) form- und/oder reibschlüssig auf die erste Scheibe (16) und der zweite Motor (14) mittels eines zweiten Ritzels (22) form- und/oder reibschlüssig auf die zweite Scheibe (20) wirkt.

9. Antriebsvorrichtung (10) nach Anspruch 8, mit einem identischen Übersetzungsverhältnis des ersten Ritzels (18) und der ersten Scheibe (16) einerseits sowie des zweiten Ritzels (22) und der zweiten Scheibe (20) andererseits.

10. Stellantrieb mit einer Antriebsvorrichtung (10) nach einem der vorangehenden Ansprüche.

11. Verfahren zum Betrieb einer Antriebsvorrichtung (10) nach einem der Ansprüche 7, 8 oder 9 oder eines Stellantriebs nach Anspruch 10,
- wobei beim Antrieb der ersten Scheibe (16) mittels des ersten Motors (12) und der zweiten Scheibe (20) mittels des zweiten Motors (14) eine Rotation der jeweiligen Scheibe (16, 20) mit einer jeweiligen Drehzahl resultiert und
- wobei durch Einstellung unterschiedlicher Drehzahlen der beiden Scheiben (16, 20) die Spindelmutter (30) in axialer Richtung entlang der Spindel (24) bewegt wird.

12. Verfahren nach Anspruch 11, wobei durch Einstellung eines Unterschieds der Drehzahlen der beiden Scheiben (16, 20) eine Geschwindigkeit der Bewegung der Spindelmutter (30) entlang der Spindel (24) eingestellt wird.

13. Verfahren nach Anspruch 11 oder 12, wobei die Antriebsvorrichtung (10) aktiviert wird, indem die beiden Scheiben (16, 20) auf eine übereinstimmende, vorgegebene oder vorgebbare Solldrehzahl beschleunigt werden.

14. Verfahren nach Anspruch 13, wobei durch Einstellung der Solldrehzahl eine mittels der Antriebsvorrichtung (10) ausübbare Kraft eingestellt wird.
